# EUROPEAN PATENT SPECIFICATION

(11) **EP 2 340 108 B1**
(45) Date of publication and mention of the grant of the patent: **25.07.2012**
(21) Application number: 09789050.3
(22) Date of filing: 31.07.2009
(51) Int. Cl.: B01F 11/00, B01F 5/06, B01F 13/00, B29C 69/02

(54) **Mixing pipette**
Mischpipette
Pipette de mélange

(30) Priority: 19.08.2008 US 229098
(43) Date of publication of application: 06.07.2011
(73) Proprietor: Biomerieux, Inc, Durham, NC 27712 (US)
(72) Inventor: BISHOP, James, Clement, Columbia MO 65203 (US)
(74) Representative: Butler, Michael John
(86) International application number: PCT/US2009/004428
(87) International publication number: WO 2010/021654

(56) References cited:
- EP-A2- 0 805 345
- WO-A2-03/016832
- JP-A- 60 050 433
- JP-A- 2003 254 877
- US-A- 2 836 979

## Description

### BACKGROUND OF THE INVENTION

### Field of the invention

This invention relates to a pipette used to mix and transfer bacteria colony specimens suspended in solution. In particular, the invention relates to a thin walled tube having a molded profile section that simultaneously breaks apart and mixes bacteria colony specimens in a saline suspension. The tube can also be of sufficient length to act as a pipette transfer system. The pipette tube can be extruded from an optically clear plastic, in which case it also be integrated into an electronic detection system to determine the McFarland turbidity of the mixed bacteria/saline solution.

### Description of related art

Rapid and accurate processing of hospital patient samples is critical for diagnosing the illness and administering the correct bacteria-destroying drug. Microbiologists currently collect patient samples and place them in media-filled Petri dishes. The dishes are then incubated in a temperature controlled environment. When bacteria colonies become visible in the Petri dish, some or all of the colonies are removed from the Petri dish with a cotton swab, metal wand, or other implement and inserted into a test tube filed with a saline solution. The bacterial colonies are then mixed with the saline solution in the test tube, typically by hand. The mixture is then placed in an instrument to incubate and monitor bacteria growth under various drug types and concentrations. The most effective drug is then identified.

The applicant's assignee has developed a test card for receiving the bacteria/saline solution mixture described in O'Bear et al., U.S. Patent 5,869,005 and an analytical instrument processing the test card for microbial identification and susceptibility testing, described in Fanning et al., U.S. Patent 5,762,873. Bishop et al., U.S. Patent 5,697,409 describes a diluting and pipetting station incorporated in the instrument of the '873 patent. The instrument of the '873 patent, commercialized by the assignee as the "Vitek 2" instrument, receives a load of test tubes after a manual mixing of colonies of bacteria in saline-filled test tubes described in the previous paragraph has occurred off-line.

Many bacteria colonies have an oily composition and only partially dissolve, leaving small clumps in the saline solution. These small clumps can affect the efficiency of the analyzing instrument. As noted above, laboratory technicians currently prepare the solution by removing the bacterial colonies from Petri dish media with a cotton swab or other implement. The swab is then inserted inside a saline-filled test tube and rotated against the tube wall to crush and mix the bacterial colony solution. The process is slow and difficult to automate. The colony mixing can be improved with mechanical mixing methods, e.g., using ultrasonic transducers or using spinning balls, but kinetic energy transferred to the bacteria using these methods can destroy the bacteria and thus affect the results of the susceptibility testing. Therefore, these methods do not work well for this application.

Other prior art of interest includes Miyake, et al., U.S. Patent 5,174,162 and Hansen et al., US publication 2008/0072664, as well as JP-A-2003 254877 end EP-A-0805 342.

### SUMMARY

In a first aspect, a one-piece, low cost pipette for mixing bacterial solutions in described. The pipette is suitable for use in conjunction with systems for automated instrument diagnosis of patient specimens.

The pipette includes a tubular body having an internal passage, a first end and a second end. The diameter of the opening at the first end of the pipette is sized so as to allow a pumping action of an associated electronic pipetter to easily gather bacterial colonies suspended in solution to be drawn into the pipette internal passage using vacuum. Above the opening, the tubular body is deformed inward to create a narrow constriction or slit within the internal passage of the pipette. When vacuum is applied to the pipette and the bacteria solution is drawn into the pipette, the slit increases the velocity of the bacteria solution while gently deforming and separating the bacteria colony/colonies. As the deformed bacterial colony passes through the slit, the bacteria solution is mixed due to turbulent flow within the pipette created by the increase in velocity. Bacteria colony size is further reduced by alternating the pipette flow direction to cycle the bacteria through the slit two or more times. A sloped entrance to the slit also prevents the oily bacteria from clogging the slit during cycle reversals. The slit opening increases in size and transitions from a narrow, constricted profile ("exit" to the slit) to the tube inside diameter allowing the bacteria colonies to break free and thus become more evenly dispersed in the saline solution.

The entrance and exits to the slit need not be symmetrically shaped. In one possible embodiment, they are symmetric. Additionally, in one embodiment there is a second slit in the mixing pipette adjacent the other open end of the pipette. In this embodiment, the entire pipette is symmetric - two slits proximate the two open ends, each slit has entrances and exits to the slits, and such entrances and exits may or may not be symmetric.

A working prototype of the mixing pipette tip has demonstrated the feasibility of mixing bacteria colony specimens in saline filled test tubes. The process of mixing the bacteria solution can be easily automated by connecting the mixing tip to an electronically controlled pipetter.

The present mixing pipette design can also be used in other industries that require an inexpensive and simple method for mixing difficult substances in a solution.

In another aspect, a pipetting system is described which comprises an electronic pipetter having a vacuum source and a tip and a supply of pipettes. Each of the pipettes comprises a generally cylindrical, elongate tubular body having an internal passage having a tube inside diameter, a first opening at a first end of the tubular body and a second opening at a second end of the tubular body. The tip of the electronic pipetter is adapted to fit into the second end of the tubular body. The tubular body further comprises an inward deformation between the first and second ends to create a narrow slit within the internal passage of the pipette, the slit having a sloped entrance at one side thereof and a sloped exit at the other side thereof, the sloped entrance and exit providing a transition between the tube inside diameter and the narrow slit. The sloped entrance and exit may or may not be symmetric.

In another aspect, a method making a pipette is provided comprising the steps of:
extruding a plastic material into a generally cylindrical tubular body having an internal passage having a tube inside diameter, a first opening at a first end of the tubular body and a second opening at a second end of the tubular body; and
forming in the tubular body further an inward deformation between the first and second ends to create a narrow slit within the internal passage of the pipette, the slit having a sloped entrance at one side thereof and a sloped exit at the other side thereof, the sloped entrance and exit providing a transition between the tube inside diameter and the narrow slit.

### BRIEF DESCRIPTION OF THE DRAWINGS

Figure 1 is a perspective view of a mixing pipette in accordance with a preferred embodiment.
Figure 2 is an elevational view of the pipette of Figure 1.
Figure 3 is a vertical cross-sectional view of the pipette of Figures 1 and 2.
Figure 4 is a cross-sectional view taken along the lines 4-4 of Figure 2.
Figure 5 is a schematic illustration showing the mixing pipette of Figures 1-4 being used by pipetting system to draw a solution containing colonies of bacteria from a test tube.
Figure 6 is an illustration showing the drawing of the sample and colonies into the pipette of Figure 5. The colonies of bacteria present in the sample are mixed into a more homogenous mixture using the mixing structure in the pipette.
Figure 7 is an illustration showing the dispensing of the sample and colonies back into the test tube.

### DETAILED DESCRIPTION OF PREFERRED EMBODIMENT

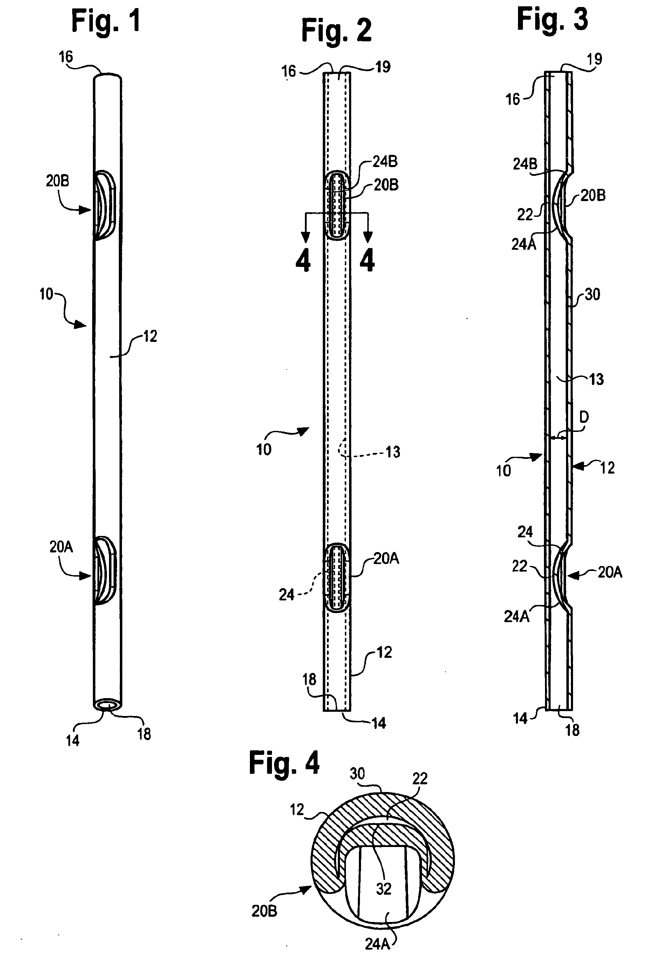

Referring now to the drawings, Figure 1 is a perspective view of a mixing pipette 10 in accordance with a preferred embodiment. Figure 2 is an elevational view of the pipette 10, Figure 3 is a vertical cross-sectional view of the pipette 10 and Figure 4 is a cross-sectional view taken along the lines 4-4 of Figure 2.

The pipette 10 is in the form of a generally cylindrical, elongate tubular body 12 having a cylindrical wall 30. The wall 30 defines an internal passage 13 having a tube inside diameter D. The pipette has a first end 14, a second end 16, an opening 18 at the first end of the tubular body 12 and a second opening 19 at the second end of the tubular body 12.

The cylindrical wall 30 includes at least one inward deformation 20 between the first and second ends 14 and 16. In the illustrated embodiment, there are two of deformations 20A and 20B are provided, one proximate to the first end 14 and the other proximate from the second end 16. As shown best in Figure 3 and 4, the deformation 20 is created by deforming a portion 32 of the wall 30 inwardly using a tool such that it creates a narrow constriction or slit 22 within the internal passage 13 of the pipette. The slit 22 has a sloped entrance at one side thereof defined by a curved radial ramp feature 24A in the wall 30. The slit 22 further has a sloped exit at the other side of the slit formed by the curved radial ramp feature 24B. The sloped entrance and exit to the slit 22 provide a transition between the tube inside diameter D and the narrow slit 22. The sloped entrance and exit are symmetrical in the illustrated embodiment (as shown in Figure 3), but this is not important and the entrance could have one sloped shape and the exit could have another, different sloped shape, e.g., to provide for greater vorticity and mixing in the interior passage 13 of the pipette above the slit 22. For example, the slope angles could be different to cause a turbulent action in one direction (aspiration) and a different action when dispensing. Such asymmetry could, for example, be made by changing the angle or shape of the surface 24 inward (towards the middle) of the slit 22.

As shown in Figures 1-3, there are two inward deformations 20A and 20B between the first and second ends, and each of the inward deformations 20 are characterized by a narrow slit 22 within the internal passage 13 of the pipette 10, the slit having a sloped entrance and a sloped exit as best show in Figure 3, the sloped entrance and exit providing a transition between the tube inside diameter and the narrow slit. The pipette could have additional deformation regions as well. The advantage of the design of Figure 2 is that the pipette is symmetrical or "double ended", and it does not matter which end is picked up and inserted into a pipetter.

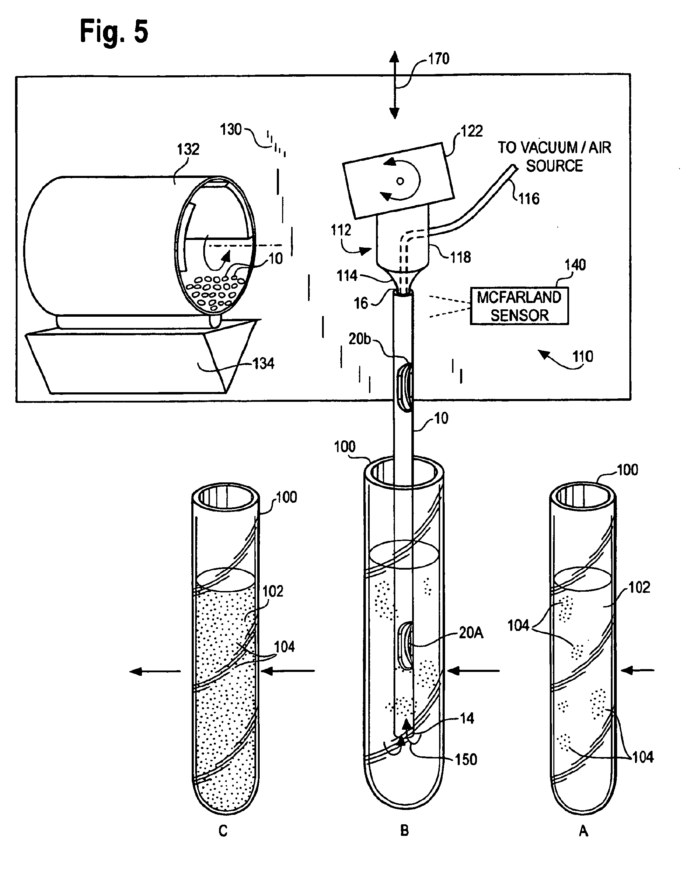

Figure 5 is a schematic illustration showing the mixing pipette 10 of Figures 1-4 being used by electronic pipetter system 110 to mix a sample containing colonies of bacteria 104 in a saline solution 102 contained within a test tube 100. The test tubes 100 are supported or carried by any convenient structure, which is not important and therefore omitted from the present discussion. The bacterial colonies 104 are clumped somewhat in the test tube initially. The test tubes are moved one at a time to the position below the pipetter system 110. The pipetter system 110 includes a rotating pipetter 112 having a tip 114 which fits snugly into the open end of the pipette 10. The pipetter 112 has a tube 116 which is connected to a source of vacuum. The tube connects to a passage 118 in the pipetter 112. The pipetter 112 moves up and down as indicated by the arrow 120 and rotates about an axis as indicated by the arrow 122. A drum 132 contains a supply of pipettes 10 for the pipetter 112. The movable plate 134 is placed below a slot (not shown) in the bottom of the drum 132. The construction and operation of the drum 132 and the pipetter 112 can follow the pipetting station described in detail in Bishop et al., U.S. Patent 5,697,409. Additionally, the details of the pipetter system are not particularly important and can vary widely from the details of the Bishop et al. '409 patent.

The test tube is moved from position A to position B in order to mix thoroughly the colonies of bacteria 104 present in the test tube 100. At position B, the pipetter 112 picks up one of the pipettes 10 from the drum 132 such that the tip 114 of the pipetter is inserted into the end of the pipette 10. The pipette is then lowered into the test tube 100 as shown at position B.

The diameter of the pipette tube openings 14 and 19 is significantly larger than a conventional pipette tip to allow the pumping action of the electronic pipetter system 110 to easily gather bacterial colonies 104 suspended in solution 102. As the vacuum is drawn on the pipette, solution 102 and bacterial colonies 104 are drawn into the pipette 10 as indicated by the arrows 150. The solution 102 and colonies 104 are drawn into the pipette and moved past the deformation 20A up to approximately the level of the upper deformation 20B. The slit 22 (Figure 4) increases the velocity of the bacteria solution from a "venturi" effect while gently deforming, breaking up and otherwise separating the bacteria colony. As the deformed bacterial colony passes through the slit 22, the bacteria solution is mixed with a turbulent flow in the interior of the pipette 10 above the deformation 20A created by the increase in velocity. Bacteria particle size is further reduced by alternating the pipetter flow direction to cycle the bacteria back through the slit and into the test tube 100 and possibly repeating this process 2 or more times. The sloped entrance to the slit 22 due to the curved ramp walls 24A and 24B also prevents the oily bacteria from clogging the narrow slit 22 during cycle reversals. The slit 22 opening increases in size and transitions from a narrow quasi-elliptical profile (Figure 4) to the tube inside diameter D (as indicated in Figure 3) allowing the bacteria particles to break free. (The term "elliptical" is not used in the this document in the strict mathematical sense, but rather as a rough approximation to describe the highly flattened passage defined by the slit 22 when the wall 32 of the pipette is deformed against the real wall 30, as shown in Figure 4)

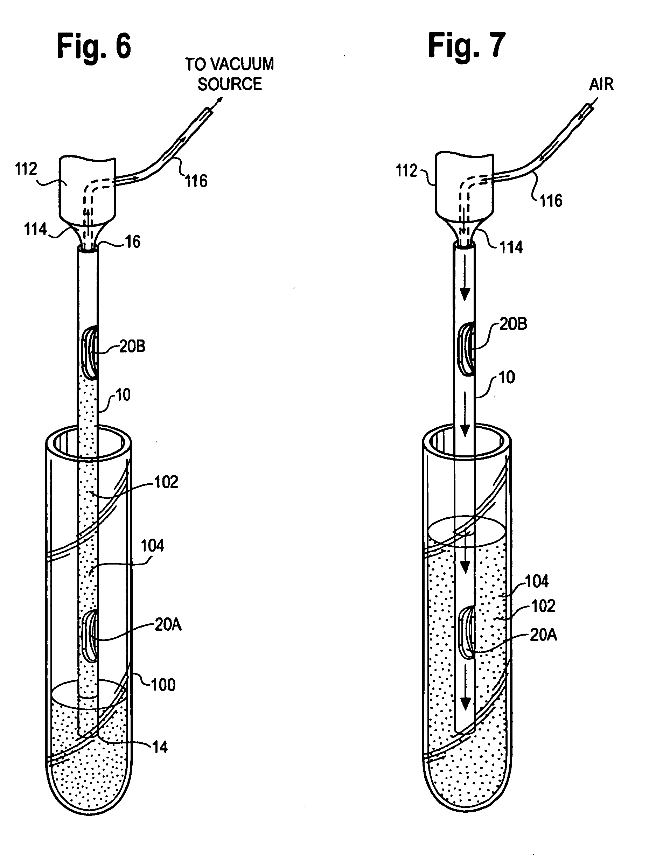

During the mixing process, depending on the diameter and length of the pipette and the volume of the solution in the test tube, it is possible to draw much of the solution in the test tube up into the interior of the pipette, perhaps 50 percent of it or even more. See Fig. 6. The controller for the pipetter system then releases the vacuum and the flow of air into the upper opening of the pipette causes the volume of the solution within the pipette 10 to flow back down into the test tube. See Figure 7. The flow of the solution down past the deformation 20A back into the test tube provides further mixing. The cycle of Figures 6 and 7 can be repeated as may be necessary. While the solution is held within the pipette 10 by vacuum, the pipette can be raised to the level of a McFarland sensor 140 provided in the system 110. The McFarland sensor 140 measures the turbidity of the solution in the pipette. The details of the McFarland sensor 140 are known in the art and therefore a discussion is omitted. The use of a McFarland sensor will require that the pipette be made of an optically clear material such glass or clear plastic material.

Referring again to Figure 5, after the pipette mixing is performed, the test tube is advanced to position C. McFarland testing of the solution may be conducted of the test tube at position C (or in a downstream processing location). Another test tube is then moved into the position below the pipetter 112 and the processing repeats. After all the test tubes in a batch have been mixed, the test tubes can then be incubated in a processing instrument. In one example, the test tubes are placed into a cassette into the Vitek 2 instrument and samples automatically loaded into test cards as described in the above-referenced Fanning et al. '873 patent.

A preferred method for making the pipette is to extrude a plastic material into a generally cylindrical tubular body 10 having an internal passage 13 having a tube inside diameter, a first opening at a first end of the tubular body and a second opening at a second end of the tubular body. The tubular body is further formed with at least one an inward deformation 20 between the first and second ends to create a narrow slit 22 within the internal passage of the pipette. This forming step can be performed on the plastic material while it is still relatively warm with a tool. Alternatively, the plastic material is allowed to cool and harden and then localized heating is applied to the area where the deformation is formed to soften the material and then form it inwardly with a tool. The slit 22 has a sloped entrance at one side thereof and a sloped exit at the other side thereof as shown in Figure 3, the sloped entrance and exit providing a transition between the tube inside diameter and the narrow slit.

From the foregoing, it will be appreciated that I have described a method of mixing a bacterial solution comprising the steps of:
(1) providing a mixing pipette 10 having a generally cylindrical, elongate tubular body 12 having an internal passage 13 having a tube inside diameter, a first opening 18 at a first end 14 of the tubular body and a second opening 19 at a second end 16 of the tubular body;
   wherein the tubular body further comprises an inward deformation 20 between the first and second ends to create a narrow slit 22 within the internal passage 13 of the pipette, the slit having a sloped entrance at one side thereof and a sloped exit at the other side thereof, the sloped entrance and exit (formed by curved ramps 24) providing a transition between the tube inside diameter and the narrow slit;
(2) placing the first end 14 of the mixing pipette 10 into a vessel 100 containing the bacterial solution (Figure 5), and
(3) applying vacuum to the second end 16 of the mixing pipette (Figures 5, 6) to draw the bacterial solution into the internal passage 13 of the pipette past the slit 22, the slit increasing the velocity of the solution 102 within the internal passage 13 while gently deforming and separating the bacterial colony 104.

In one embodiment, the method further comprises the step (4) of dispensing the solution into the vessel (Figure 7), and then repeating steps 3) and 4) at least two times.

In one embodiment, step 3) is performed automatically by an electronic pipetter 112 coupled to the second end 16 of the mixing pipette.

In one embodiment, the method further includes the step of measuring the McFarland turbidity of the bacterial solution while the solution is held in the internal passage of the mixing pipette past the slit 22 in according with step 3).

Variation from the specifics of the disclosed embodiment are possible. For example, different ramp angles, profile shapes, and different number of deformations may be provided. Such alternative configurations may alter the precise nature of the turbulent flow but the mixing principles remain the same. In all of such embodiments, a narrow elliptical slit gently squeezes and disperses the bacteria colony, and the acceleration of the solution/colonies through the slit 22 creates mixing turbulence, and the radial ramp transitions 24 prevent clogging. The present mixing pipette design can also be used in other industries that require an inexpensive and simple method for mixing difficult substances in a solution. All questions concerning the scope of the invention are to be answered by reference to the appended claims.

## Claims

1. A mixing pipette (10) comprising:
a generally cylindrical, elongate tubular body (20) having an internal passage (13) having a tube inside diameter, a first opening (18) at a first end (14) of the tubular body and a second opening (19) at a second end (16) of the tubular body;
wherein the tubular body further comprises an inward deformation between the first and second ends (16) to create a narrow slit (22) within the internal passage (13) of the pipette, the slit having a sloped entrance (24e) at one side thereof and a sloped exit (24b) at the other side thereof, the sloped entrance and exit providing a transition between the tube inside diameter and the narrow slit.

2. The mixing pipette of claim 1, wherein the tubular body comprises at least two inward deformations between the first and second ends, each of the inward deformations **characterized by** a narrow slit within the internal passage of the pipette, the slit having a sloped entrance and a sloped exit, the entrance and exit providing a transition between the tube inside diameter and the narrow slit.

3. The mixing pipette of claim 2, wherein the tubular body comprises two of said inward deformations, the first inward deformation proximate the first end and the second inward deformation proximate the second end.

4. The mixing pipette of claim 3, wherein the locations of the two inward deformations is such that the mixing pipette has symmetry in the first and second ends.

5. The mixing pipette of claim 1, wherein the pipette is optically clear.

6. The mixing pipette of claim 1, wherein the sloped entrance and sloped exit are symmetrical.

7. The mixing pipette of claim 1, wherein the sloped entrance and sloped exit are not symmetrical.

8. A pipetting system, comprising:
a supply of pipettes each being as claimed in any of the preceding claims; and
an electronic pipetter having a vacuum source and a tip, wherein the tip of the electronic pipetter is adapted to fit into the second end of the tubular body.

9. The pipetting system of claim 8, further comprising a test tube containing a bacterial solution containing bacterial colonies, and wherein the diameter of the opening at the first end of the pipette is sized so as to allow a pumping action of the electronic pipetter to gather bacterial colonies suspended in the solution to be drawn into the pipette internal passage using vacuum.

10. The pipetting system of claim 8;
wherein the pipette is optically clear; and
further comprising an instrument for measuring the McFarland turbidity of the bacterial solution within the pipette.

11. A method of mixing a bacterial solution comprising the steps of:
(1) providing a mixing pipette having a generally cylindrical, elongate tubular body having an internal passage having a tube inside diameter, a first opening at a first end of the tubular body and a second opening at a second end of the tubular body;
wherein the tubular body further comprises an inward deformation between the first and second ends to create a narrow slit within the internal passage of the pipette, the slit having a sloped entrance at one side thereof and a sloped exit at the other side thereof, the sloped entrance and exit providing a transition between the tube inside diameter and the narrow slit;
(2) placing the first end of the mixing pipette into a vessel containing the bacterial solution, and
(3) applying vacuum to the second end of the mixing pipette to draw the bacterial solution is drawn into the internal passage of the pipette past the slit, the slit increasing the velocity of the solution within the internal passage while gently deforming and separating the bacterial colony.

12. The method of claim 11, further comprising step (4) dispensing the solution into the vessel, and then repeating steps 3) and 4).

13. The method of claim 11, wherein step 3) is performed automatically by an electronic pipetter coupled to the second end of the mixing pipette.

14. The method of claim 11, further comprising the step of measuring the McFarland turbidity of the bacterial solution while the solution is held in the internal passage of the mixing pipette past the slit in according with step 3).

15. A method of making a pipette, comprising the steps of:
extruding a plastic material into a generally cylindrical tubular body having an internal passage having a tube inside diameter, a first opening at a first end of the tubular body and a second opening at a second end of the tubular body; and
subsequently forming in the tubular body further an inward deformation between the first and second ends to create a narrow slit within the internal passage of the pipette, the slit having a sloped entrance at one side thereof and a sloped exit at the other side thereof, the sloped entrance and exit providing a transition between the tube inside diameter and the narrow slit.

## Patentansprüche

1. Mischpipette (10), die aufweist:
einen im Allgemeinen zylindrischen, langgestreckten röhrenförmigen Körper (20), der einen inneren Durchgang (13) besitzt, der einen Röhreninnendurchmesser, eine erste Öffnung (18) an einem ersten Ende (14) des röhrenförmigen Körpers und eine zweite Öffnung (19) an einem zweiten Ende (16) des röhrenförmigen Körpers aufweist;
wobei der röhrenförmige Körper ferner eine Einwärtsverformung zwischen dem ersten und dem zweiten Ende (16) enthält, um in dem inneren Durchgang (13) der Pipette einen schmalen Schlitz (22) zu erzeugen, wobei der Schlitz einen angeschrägten Eingang (24e) an seiner einen Seite und einen angeschrägten Ausgang (24b) an seiner anderen Seite aufweist, wobei der angeschrägte Eingang und der angeschrägte Ausgang einen Übergang zwischen dem Röhreninndurchmesser und dem schmalen Schlitz bilden.

2. Mischpipette nach Anspruch 1, wobei der röhrenförmige Körper mindestens zwei Einwärtsverformungen zwischen dem ersten und dem zweiten Ende aufweist, wobei jede der Einwärtsverformungen durch einen schmalen Schlitz in dem inneren Durchgang der Pipette gekennzeichnet ist, wobei der Schlitz einen angeschrägten Eingang und einen angeschrägten Ausgang aufweist, wobei der Eingang und der Ausgang einen Übergang zwischen dem Innenröhrendurchmesser und dem schmalen Schlitz bilden.

3. Mischpipette nach Anspruch 2, wobei der röhrenförmige Körper zwei der Einwärtsverformungen aufweist, wobei die erste Einwärtsverformung in der Nähe des ersten Endes und die zweite Einwärtsverformung in der Nähe des zweiten Endes liegt.

4. Mischpipette nach Anspruch 3, wobei die Positionen der beiden Einwärtsverformungen derart sind, dass die Mischpipette eine Symmetrie in dem ersten und dem zweiten Ende aufweist.

5. Mischpipette nach Anspruch 1, wobei die Pipette optisch klar ist.

6. Mischpipette nach Anspruch 1, wobei der angeschrägte Eingang und der angeschrägte Ausgang symmetrisch sind.

7. Mischpipette nach Anspruch 1, wobei der angeschrägte Eingang und der angeschrägte Ausgang nicht symmetrisch sind.

8. Pipettiersystem, das aufweist:
einen Vorrat an Pipetten jeweils nach einem der vorangehenden Ansprüche; und
eine elektronische Pipettiervorrichtung, die eine Vakuumquelle und eine Spitze besitzt, wobei die Spitze der elektronischen Pipettiervorrichtung ausgelegt ist, um in das zweite Ende des röhrenförmigen Körpers zu passen.

9. Pipettiersystem nach Anspruch 8, das ferner eine Teströhre enthält, die eine bakterielle Lösung aufweist, die Bakterienkolonien enthält, wobei der Durchmesser der Öffnung an dem ersten Ende der Pipette ausgelegt ist, um einen Pumpvorgang der elektronischen Pipettiervorrichtung zu erlauben, um in der Lösung schwebende Bakterienkolonien, die in den inneren Durchgang der Pipette durch Verwendung von Unterdruck gesaugt werden sollen, zu sammeln.

10. Pipettiersystem nach Anspruch 8;
wobei die Pipette optisch klar ist; und
das ferner ein Instrument zum Messen der McFarland-Trübung der bakteriellen Lösung in der Pipette enthält.

11. Verfahren zum Mischen einer bakteriellen Lösung, das die folgenden Schritte umfasst:
(1) Vorsehen einer Mischpipette, die einen im Allgemeinen zylindrischen, langgestreckten röhrenförmigen Körper besitzt, der einen inneren Durchgang besitzt, der einen Röhreninnendurchmesser, eine erste Öffnung an einem ersten Ende des röhrenförmigen Körpers und eine zweite Öffnung an einem zweiten Ende des röhrenförmigen Körpers aufweist;
wobei der röhrenförmige Körper ferner eine Einwärtsverformung zwischen dem ersten und dem zweiten Ende enthält, um in dem inneren Durchgang der Pipette einen schmalen Schlitz zu erzeugen, wobei der Schlitz einen angeschrägten Eingang an seiner einen Seite und einen angeschrägten Ausgang an seiner anderen Seite aufweist, wobei der angeschrägte Eingang und der angeschrägte Ausgang einen Übergang zwischen dem Röhreninndurchmesser und dem schmalen Schlitz bilden;
(2) Einbringen des ersten Endes der Mischpipette in eine Küvette, die die bakterielle Lösung enthält, und
(3) Anlegen eines Unterdrucks an das zweite Ende der Mischpipette, um die bakterielle Lösung an dem Schlitz vorbei in den inneren Durchgang der Pipette zu ziehen, wobei der Schlitz die Geschwindigkeit der Lösung innerhalb des inneren Durchgangs erhöht, während er langsam die Bakterienkolonie verformt und trennt.

12. Verfahren nach Anspruch 11, das ferner einen Schritt (4) zum Ausgeben der Lösung in die Küvette und dann die Wiederholung der Schritte 3) und 4) umfasst.

13. Verfahren nach Anspruch 11, wobei der Schritt 3) durch eine elektronische Pipettiervorrichtung, die mit dem zweiten Ende der Mischpipette gekoppelt ist, automatisch ausgeführt wird.

14. Verfahren nach Anspruch 11, das ferner einen Schritt des Messens der McFarland-Trübung der bakteriellen Lösung umfasst, während die Lösung an dem Schlitz vorbei in dem inneren Durchgang der Mischpipette in Übereinstimmung mit Schritt 3) gehalten wird.

15. Verfahren zum Herstellen einer Pipette, das die folgenden Schritte umfasst:
Strangpressen eines Kunststoffmaterials zu einem im Allgemeinen zylindrischen röhrenförmigen Körper, der einen inneren Durchgang besitzt, der einen Röhreninnendurchmesser, eine erste Öffnung an einem ersten Ende des röhrenförmigen Körpers und eine zweite Öffnung an einem zweiten Ende des röhrenförmigen Körpers aufweist; und
darauffolgendes Bilden einer Einwärtsverformung in dem röhrenförmigen Körper zwischen dem ersten und dem zweiten Ende, um innerhalb des inneren Durchgangs der Pipette einen schmalen Schlitz zu erzeugen, wobei der Schlitz einen angeschrägten Eingang an seiner einer Seite und einen angeschrägten Ausgang an seiner anderen Seite aufweist, wobei der angeschrägte Eingang und der angeschrägte Ausgang einen Übergang zwischen dem Röhreninnendurchmesser und dem schmalen Schlitz bilden.

## Revendications

1. Pipette de mélange (10), comportant :
un corps tubulaire allongé, généralement cylindrique (20) ayant un passage interne (13) ayant un diamètre intérieur de tube, une première ouverture (18) au niveau d'une première extrémité (14) du corps tubulaire et une seconde ouverture (19) au niveau d'une seconde extrémité (16) du corps tubulaire ;
dans lequel le corps tubulaire comporte en outre une déformation vers l'intérieur entre les première et seconde extrémités (16) pour créer une fente étroite (22) dans le passage interne (13) de la pipette, la fente ayant une entrée inclinée (24a) au niveau d'un côté de celle-ci et une sortie inclinée (24b) au niveau de l'autre côté de celle-ci, l'entrée et la sortie inclinées fournissant une transition entre le diamètre intérieur de tubes et la fente étroite.

2. Pipette de mélange selon la revendication 1, dans laquelle le corps tubulaire comporte au moins deux déformations vers l'intérieur entre les première et seconde extrémités, chacune des déformations vers l'intérieur étant **caractérisée par** une fente étroite dans le passage interne de la pipette, la fente ayant une entrée inclinée et une sortie inclinée, l'entrée et la sortie fournissant une transition entre le diamètre intérieur de tube et la fente étroite.

3. Pipette de mélange selon la revendication 2, dans laquelle le corps tubulaire comporte deux desdites déformations vers l'intérieur, la première déformation vers l'intérieur étant proche de la première extrémité et la seconde déformation vers l'intérieur étant proche de la seconde extrémité.

4. Pipette de mélange selon la revendication 3, dans laquelle les positions des deux déformations vers l'intérieur sont telles que la pipette de mélange a une symétrie dans les première et seconde extrémités.

5. Pipette de mélange selon la revendication 1, dans laquelle la pipette est optiquement claire.

6. Pipette de mélange selon la revendication 1, dans laquelle l'entrée inclinée et la sortie inclinée sont symétriques.

7. Pipette de mélange selon la revendication 1, dans laquelle l'entrée inclinée et la sortie inclinée ne sont pas symétriques.

8. Système de pipetage, comportant :
la fourniture de pipettes chacune étant telle que revendiquée dans l'une quelconque des revendications précédentes ; et
un pipetteur électronique ayant une source sous vide et un embout, dans lequel l'embout du pipetteur électronique est adapté pour s'ajuster dans la seconde extrémité du corps tubulaire.

9. Système de pipetage selon la revendication 8, comportant en outre un tube à essais contenant une solution bactérienne contenant des colonies bactériennes, et dans lequel le diamètre de l'ouverture de la première extrémité de la pipette est dimensionné de manière à permettre à une action de pompage du pipetteur électronique de rassembler des colonies bactériennes suspendues dans la solution à aspirer dans le passage interne de la pipette en utilisant le vide.

10. Système de pipetage selon la revendication 8 ;
dans lequel la pipette est optiquement claire ; et
comportant en outre un instrument pour mesurer la turbidité de McFarland de la solution bactérienne contenue dans la pipette.

11. Procédé de mélange d'une solution bactérienne comportant les étapes consistant à :
(1) fournir une pipette de mélange ayant un corps tubulaire allongé, généralement cylindrique ayant un passage interne ayant un diamètre de tube intérieur, une première ouverture au niveau d'une première extrémité du corps tubulaire et une seconde ouverture au niveau d'une seconde extrémité du corps tubulaire ;
dans lequel le corps tubulaire comporte en outre une déformation vers l'intérieur entre les première et seconde extrémités afin de créer une fente étroite dans le passage interne de la pipette, la fente ayant une entrée inclinée au niveau d'un côté de celle-ci et une sortie inclinée au niveau de l'autre côté de celle-ci, l'entrée et la sortie inclinées fournissant une transition entre le diamètre intérieur de tube et la fente étroite ;
(2) placer la première extrémité de la pipette de mélange dans un récipient contenant la solution bactérienne, et
(3) appliquer un vide à la seconde extrémité de la pipette de mélange pour aspirer la solution bactérienne dans le passage interne de la pipette après la fente, la fente augmentant la vitesse de la solution dans le passage interne tout en déformant et en séparant progressivement la colonie bactérienne.

12. Procédé selon la revendication 11, comportant en outre l'étape (4) délivrant la solution dans le récipient, et répétant ensuite les étapes 3) et 4).

13. Procédé selon la revendication 11, dans lequel l'étape 3) est exécutée automatiquement par un pipetteur électronique couplé à la seconde extrémité de la pipette de mélange.

14. Procédé selon la revendication 11, comportant en outre l'étape consistant à mesurer la turbidité de McFarland de la solution bactérienne alors que la solution est maintenue dans le passage interne de la pipette de mélange après la fente conformément à l'étape 3).

15. Procédé de fabrication d'une pipette, comportant les étapes consistant à :
extruder un matériau en plastique dans un corps tubulaire généralement cylindrique ayant un passage interne ayant un diamètre intérieur de tube, une première ouverture au niveau d'une première extrémité du corps tubulaire et une seconde ouverture au niveau d'une seconde extrémité du corps tubulaire ; et
former ensuite dans le corps tubulaire une déformation vers l'intérieur entre les première et seconde extrémités afin de créer une fente étroite: dans le passage interne de la pipette, la fente ayant une entrée inclinée au niveau d'un côté de celle-ci et une sortie inclinée au niveau de l'autre côté de celle-ci, l'entrée et la sortie inclinées fournissant une transition entre le diamètre intérieur de tube et la fente étroite.
